# EUROPÄISCHE PATENTSCHRIFT

(11) **EP 0 427 241 B1**
(45) Veröffentlichungstag und Bekanntmachung des Hinweises auf die Patenterteilung: **04.08.1993**
(21) Anmeldenummer: 90121319.9
(22) Anmeldetag: 07.11.1990
(51) Int. Cl.: C02F 1/48

(54) **Permanentmagnetisches Flüssigkeitsbehandlungsgerät**
Apparatus for the treatment of liquids by permanent magnets
Dispositif de traitement de liquides à l'aide d'aimants permanents

(30) Priorität: 09.11.1989 DE 3937349
(43) Veröffentlichungstag der Anmeldung: 15.05.1991
(73) Patentinhaber: PERMA TRADE WASSERTECHNIK GmbH, D-70469 Stuttgart (DE)
(72) Erfinder: Sautter, Hans, W-7000 Stuttgart 30 (DE)
(74) Vertreter: Kern, Wolfgang, Dipl.-Ing.

(56) Entgegenhaltungen:
- EP-A- 0 295 463
- WO-A-88/07025
- US-A- 2 652 925

## Beschreibung

Die Erfindung betrifft ein permanentmagnetisches Flüssigkeitsbehandlungsgerät gemäß Oberbegriff des Anspruchs 1.

Derartige Geräte, wie sie beispielsweise aus der US-PS-3680705 bekannt sind, werden insbesondere zur magnetischen Wasserbehandlung eingesetzt mit dem Ziel, die Bildung von Kalkablagerungen an den Innenwänden von Rohrleitungen und die dadurch bedingten, der Fachwelt bekannten Nachteile zu vermeiden. Diese Kalkablagerungen sind auf den CaCO₃-Gehalt des Wassers zurückzuführen und eine direkte Folge des Mangels an Kernbildungszentren in gewöhnlichem Leitungswasser. Sobald die CaCO₃-Konzentration die Löslichkeitsgrenze übersteigt, fällt es aus und lagert sich entweder an in dem Wasser als Spurenmaterial mitgeführten Fremdstoffen an oder scheidet sich an den Rohrleitungswänden ab, um dort zu dem gefürchteten Wasserstein zu führen.

Aus der genannten Patentschrift und im übrigen aus zahlreichen weiteren Druckschriften, so beispielsweise der EP 143823, ist die gegenseitige Beeinflussung zwischen Magnetfeldern und fließendem Wasser bekannt, wobei prinzipiell Magnetfelder Verwendung finden, die aus ringförmigen Permanentmagneten stammen und auf die Wassermoleküle einwirken. Man hat sich in diesem Zusammenhang vorzustellen, daß die losen, nicht gebündelten Wassermoleküle den ganzen Raum eines durchströmten Rohres ausfüllen, und daß in diesen Wassermolekülen Kalziumkarbonat-Moleküle in einer Konzentration eingemischt sind, die ihre Löslichkeit im Wasser übersteigt. An der Rohrwand beginnt dann alsbald an einigen Punkten die Verdichtung von Kalziumkarbonat in Form regelmäßiger Kristalle, die übereinander und an der Wand wachsen. Damit beginnt die Bildung von Kesselstein, auch Wasserstein genannt, und setzt sich Schicht auf Schicht an der Wand fort. Unter der Wirkung eines magnetischen Feldes auf einen solchen Wasserstrom kommt es nun zu einer Erschütterung der Wassermoleküle, wodurch die im Wasser mitgeführten Spurenteilchen als Keime für das überkonzentrierte Kalziumkarbonat zugänglich werden, so daß das gelöste Kalziumkarbonat sich gewissermaßen auf diese Spurenteilchen stürzt und nicht der Rohrwandung zuströmt, um sich dort zu verdichten.

Dadurch wird eine Verringerung der Kesselsteinbildung bewirkt, für die letztlich die Einwirkung des Magnetfeldes auf das Wasser ursächlich ist.

Bei einem anderen bekannten Flüssigkeitsbehandlungsgerät (WO A 88/07025) zur Verhinderung der Kalksteinbildung durchströmt das zu behandelnde Wasser ein rohrförmiges Gehäuse und wird dabei von einer Förderschnecke angetrieben. Das Gehäuse ist von einer Magnetspule umgeben, in der ein Gleichstrom erzeugt wird, der die Förderschnecke magnetisiert, so daß diese unter der Wirkung des Wasserdurchflusses ein rotierendes Magnetfeld erzeugt, wodurch das Wasser polarisiert wird, wodurch wiederum die in dem Wasser befindlichen Teilchen daran gehindert werden sollen, sich zusammenzuballen und zu kristallisieren. Diese bekannte Vorrichtung arbeitet ersichtlich mit einem durch einen elektrischen Strom erzeugten Magnetfeld und nicht mit Permanentmagneten.

Eine weitere bekannte Vorrichtung zur magnetischen Wasserbehandlung (EP-A-29 44 63) weist in einem rohrförmigen Gehäuse, das von dem zu behandelnden Wasser durchströmt wird, mehrere ringförmige Permanentmagnete auf, die gleichachsig und in Abständen voneinander befestigt sind. Die Abstände werden durch Abstandhalter zwischen den Magneten aufrechterhalten, welche den Durchfluß steuern und zu diesem Zweck scheibenartige Bauteile mit Durchbrechungen für den Wasserdurchtritt sowie mit Flügeln aufweisen.,Dadurch wird dem durchströmenden Wasser von Magnet zu Magnet immer wieder eine schraubenlinienartige, kreisende Bewegung erteilt zu dem Zweck, den Wasserstrom quer durch die Magnetfelder zu lenken. Diese bekannte Vorrichtung ist aufwendig aufgebaut, da die gewünschte spiralförmige Flüssigkeitsbewegung zwischen den einzelnen Magneten immer wieder von neuem angetrieben wird, wobei die Magneten selbst in direkte Berührung mit dem Wasserstrom treten.

Die Aufgabe der Erfindung besteht somit darin, das Behandlungsgerät der genannten Art so weiterzubilden, daß eine Verringerung der Kesselsteinbildung mit Hilfe einer gegenüber den bekannten Geräten neuartigen Ausbildung des permanentmagnetischen Flüssigkeitsbehandlungsgerätes erreicht wird, deren Herstellung weniger kostenintensiv ist.

Diese Aufgabe wird erfindungsgemäß dadurch gelöst, daß daß in dem rohrförmigen Gehäuse koaxial zu seiner Längsachse und mit Abstand von seiner Innenwand ein die zu behandelnde Flüssigkeit durch das Gehäuse durchleitendes Innenrohr aus Kunststoff angeordnet ist, dessen beidseitige Enden mit den Anschlußstükken flüssigkeitsdicht verbunden sind, deren Durchflußquerschnitt sich in Richtung auf die Gehäuseenden erweitert, daß die schneckenförmige Fördervorrichtung in wenigstens einer der beiden Erweiterungen der Anschlußstücke angeordnet ist, und daß die Ringmagnete und Distanzringe in dem flüssigkeitsfreien Raum zwischen dem Innenrohr und dem rohrförmigen Gehäuse in Richtung der Gehäuselängsachse hintereinanderliegend eingebaut sind.

Durch diese Konstruktion des Gerätes wird bei seinem in der Regel stattfindenden Einsatz zur Behandlung von Wasser nicht nur der Wirkungsgrad der Kalkausfällung wesentlich gesteigert, sondern auch eine Schutzschicht auf dem Innenrohr aufgebaut, darüberhinaus die Wirksamkeit des Abtrages alter Verkrustungen bzw. Ablagerungen auf den Innenwänden von Rohrsystemen, in die das Gerät eingebaut wird, wesentlich verbessert und die Rohrkorrosion vermindert. Dies ist vor allem darauf zurückzuführen, daß das in das Behandlungsgerät eintretende Wasser mit Hilfe der schneckenförmigen Fördervorrichtung, die in wenigstens einer der beiden Erweiterungen der Anschlußstücke sitzt, spiralförmig durch das Gehäuse hindurchgeführt wird und daher vom Gehäuseeintritt bis zum Austritt einen Weg zurücklegt, der ein Mehrfaches der Gehäuselänge beträgt. Dabei läßt sich, gemäß einer weiteren Ausgestaltung der Erfindung, die durch Übertragung entsprechender Impulse auf das durchströmende Wasser von der schneckenförmigen Fördervorrichtung entwickelte Lenkwirkung, die zur Ausbildung des spiralförmigen Wasserstroms führt, durch Ausbildung der schneckenförmigen Fördervorrichtung, die in dem zustromseitigen Anschlußstück sitzt, als doppelläufige Schnecke noch verstärken, weil letztere zu einer Verminderung des Druckverlustes führt. Das einströmende Wasser wird auf diese Weise in nahezu gleichem Winkel und im wesentlichen unabhängig von der Durchflußmenge durch das Innenrohr um eine zentrisch zur Mittelachse angeordnete Eisenspindel gelenkt, die gemäß einer weiteren Ausgestaltung der Erfindung in die Anschlußstücke hineinragt und auf deren Ende innerhalb des zustromseitigen Anschlußstückes die schneckenförmige Fördervorrichtung sitzt.

Es hat sich desweiteren als vorteilhaft erwiesen, die Erweiterungen der Anschlußstücke konisch auszubilden und an ihren Enden direkt an den Durchgangsquerschnitt des Innenrohres anzuschließen und an ihren äußeren Enden in zylindrisch geformte Gewindestücke übergehen zu lassen, mit denen die Rohrleitung,in die das Gerät eingebaut wird, verschraubt werden kann.

Indem die Ringmagnete axial magnetisiert sind und jeweils paarweise gegenpolig zusammenliegen und diese Ringmagnetpaare durch je einen Distanzring voneinander getrennt sind, der vorteilhafterweise als Eisenpolschuh ausgebildet sein kann, wobei Ringmagnete und Distanzstücke auf dem aus Kunststoff bestehenden Rohr aufsitzen, wird eine Konzentration der von den Ringmagneten erzeugten Magnetfelder zur Mitte der Eisenpolschuhe hin erreicht und diese Magnetfelder auf die Spindel geleitet, während weitere Magnetfelder halbkreisförmig von einem Eisenpolschuh zum anderen wandern.

Dieser Aufbau hat zur Folge, daß über eine relativ geringe Gehäuselänge bzw. Länge des Innenrohres das durchströmende Wasser einer erheblichen Konzentration an Schnittfeldern ausgesetzt wird, die überwiegend im rechten Winkel zum spiralförmig hindurchströmenden Wasser verlaufen, wobei überraschenderweise auch bei relativ geringen Wassermengen von etwa 0,5 l/min bereits ein guter Behandlungseffekt erzielt wird, der sich bei größeren Durchflußmengen von bis zu 60 l/min und darüber allerdings erheblich verstärkt.

Weitere vorteilhafte Ausgestaltungen der Erfindung sind den Unteransprüchen zu entnehmen. Die Erfindung wird im folgenden anhand eines in der Zeichnung dargestellten Ausführungsbeispiels näher erläutert. In der Zeichnung zeigen:
- Fig. 1: eine längsgeschnittene Ansicht des erfindungsgemäßen Flüssigkeitsbehandlungsgerätes,
- Fig. 2: eine längsgeschnittene Ansicht des rohrförmigen Gehäuses von Fig. 1,
- Fig. 3a: eine längsgeschnittene Seitenansicht eines der beiden Anschlußstücke des Gerätes,
- Fig. 3b: eine Stirnansicht des Anschlußstücks von Fig. 3a in Richtung des Pfeils A,
- Fig. 4a: eine Längsschnittansicht der schneckenförmigen Fördervorrichtung des Gerätes,
- Fig. 4b: eine Stirnansicht der Vorrichtung von Fig. 4a in Richtung des Pfeils A,
- Fig. 5a: eine Längsschnittansicht der Zentriervorrichtung für die Spindel des Gerätes und
- Fig. 5b: eine Stirnansicht der Zentriervorrichtung von Fig. 5a in Richtung des Pfeils A.

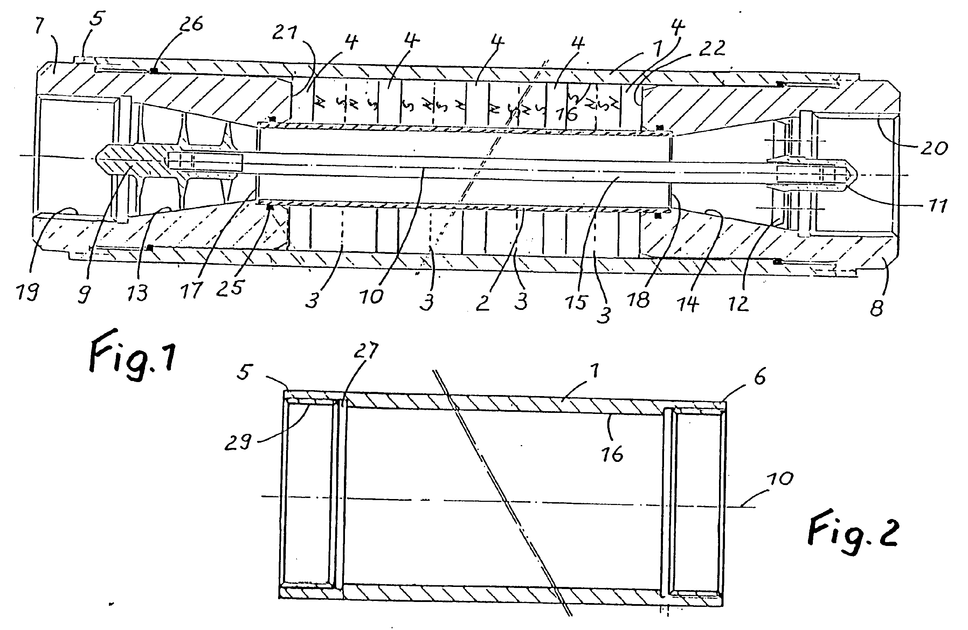

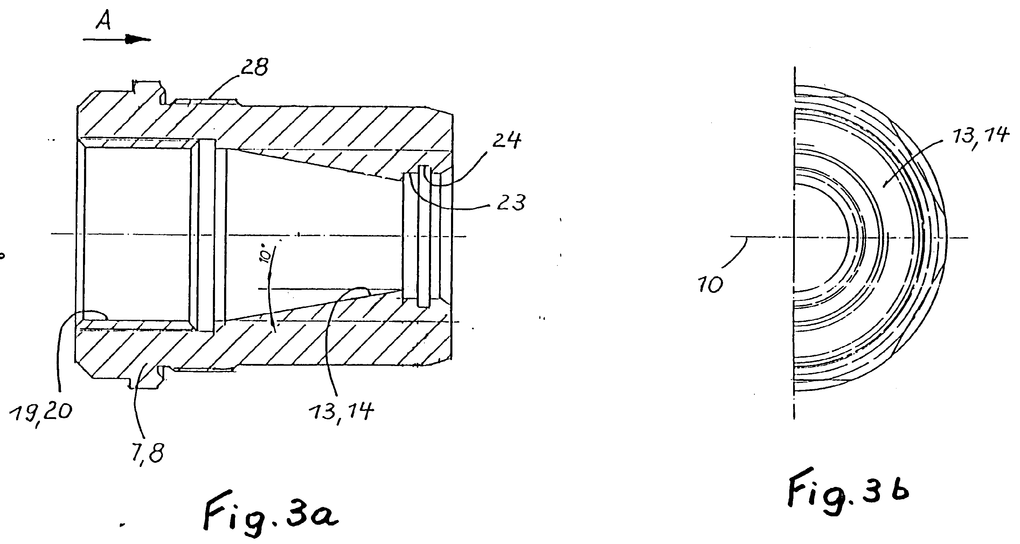

Das in Fig. 1 im Längsschnitt dargestellte permanentmagnetische Flüssigkeitsbehandlungsgerät dient zur Behandlung von Wasser und ist mit einem paramagnetischen, rohrförmigen Gehäuse 1 ausgestattet, das von der zu behandelnden Flüssigkeit von links nach rechts durchströmt wird. An den beiden Enden 5 und 6 des Gehäuses, das in Fig. 2 ebenfalls in Längsschnittansicht ohne Einbauten dargestellt ist, sind Anschlußstücke 7, 8, von denen eines im Längsschnitt in Fig. 3a dargestellt ist, durch ein Außengewinde 28 mit einem Innengewinde 29 des Gehäuses 1 verschraubt und durch Dichtungsringe 26, die in Ringnuten 27 auf der Innenwand 16 des Gehäuses 1 sitzen, dicht verbunden. In dem Gehäuse 1 befindet sich koaxial zu seiner Längsachse 10 und mit Abstand von seiner Innenwand 16 ein das zu behandelnde Wasser durch das Gehäuse hindurchleitendes Innenrohr 2 aus Kunststoff, dessen beidseitige Enden 17, 18 mit den Anschlußstücken 7, 8 durch in Ringnuten 24 der Anschlußstücke sitzende Dichtungsringe 25 flüssigkeitsdicht verbunden sind, wobei die genannten Innenrohrenden auf einer Schulter 23 des jeweiligen Anschlußstückes sitzen und beim Zusammenschrauben der Anschlußstücke 7, 8 mit dem Gehäuse 1 axial verspannt werden.

Der Durchflußquerschnitt der Anschlußstücke 7, 8 erweitert sich in Richtung auf die Gehäuseenden 5, 6. Diese konischen Erweiterungen 13, 14, die aus den Figuren 3a und 3b ersichtlich sind, sind an ihren inneren Enden, also im Bereich der Ringnut 23 der Anschlußstücke an den Durchflußquerschnitt des Innenrohres 2 angepaßt, d.h. sie gehen direkt in den letztgenannten Querschnitt über, während die äußeren Enden dieser konischen Erweiterungen in zylindrisch geformte Gewindestücke 19, 20 übergehen, mit denen die nicht dargestellten Teile der Rohrleitung verschraubt werden, in die das Gerät eingebaut wird.

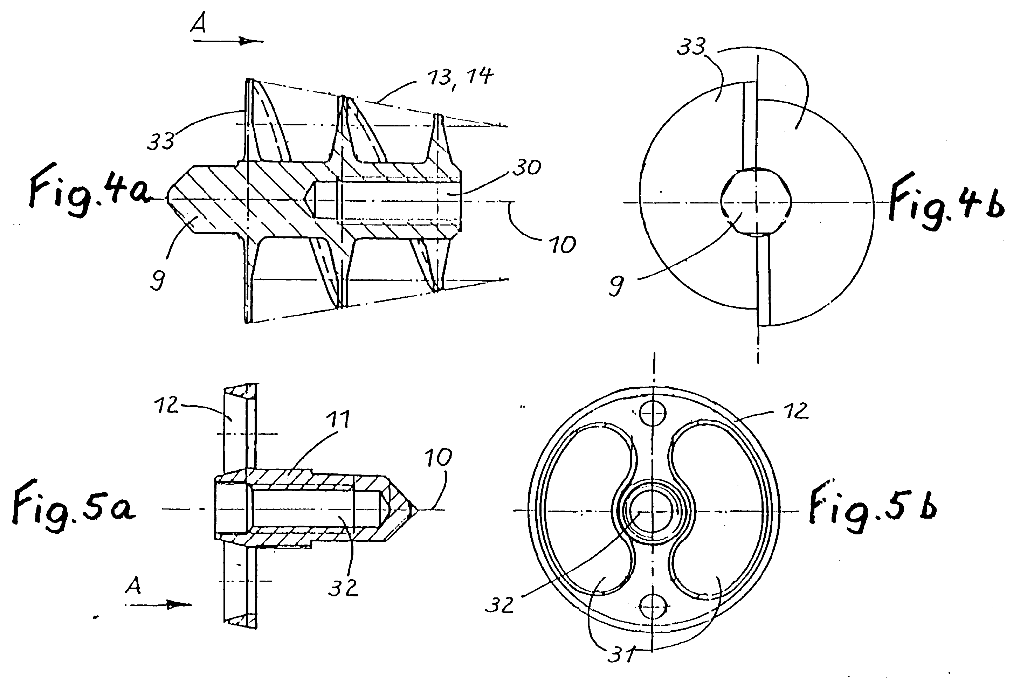

Das Innenrohr 2 ist auf seiner Innenseite glattwandig, also mit keinen Schikanen versehen, und wird zentrisch zur Mittelachse 10 von einer Eisenspindel 15 durchzogen, die in die Anschlußstücke 7, 8 hineinragt. Das zustromseitige Ende dieser Spindel, deren Durchmesser im Vergleich zum Durchmesser des Innenrohres 2 klein ist, um den Durchflußquerschnitt des Innenrohres nicht zu stark einzuengen, sitzt in einer Bohrung 30 einer schneckenförmigen Fördervorrichtung 9, die, wie die Figuren 4a und 4b zeigen , als doppelläufige Schnecke ausgebildet ist und in der konischen Erweiterung 13 des Anschlußstücks 7 sitzt, so daß der Durchmesser der Schneckengänge an diese konische Erweiterung angepasst ist, wie aus der Zeichnung hervorgeht.

Das andere, also abstromseitige Ende der Spindel 15 innerhalb des Anschlußstückes 8 sitzt in einer scheibenförmigen Zentriervorrichtung 11, 12, die in den Figuren 5a und 5b dargestellt ist, und zwar in einer Bohrung 32 der Nabe 11 dieser Zentriervorrichtung, die von einer Zentrierscheibe 12 umgeben ist, welche auf der konischen Erweiterung 14 aufsitzt, wie aus Fig. 1 ersichtlich und die, wie Fig. 5b entnommen werden kann, mit zwei großen Wasserdurchflußöffnungen 31 versehen ist, die beidseitig der Nabe 11 liegen.

In dem zwischen dem Innenrohr 2 und dem rohrförmigen Gehäuse 1 vorhandenen Ringraum, der durch die genannten Dichtungen 25 und 26 und die inneren Enden 21, 22 der Anschlußstücke 7, 8 stirnseitig flüssigkeitsdicht abgeschlossen ist, sind in Richtung der Gehäuselängsachse 10 Ringmagnete 3 und Distanzringe 4 aneinandergereiht angeordnet, wobei die Ringmagnete 3 axial magnetisiert sind und jeweils paarweise gegenpolig zusammenliegen, wie in der Zeichnung durch die Polbezeichnungen verdeutlicht wird. Dabei werden jeweils zwei aufeinanderfolgende Ringmagnetpaare durch einen Distanzring 4, der als Eisenpolschuh ausgebildet ist, voneinander getrennt. Diese Ringmagnete und Distanzringe sitzen auf dem Innenrohr auf und erzeugen Magnetfelder, die überwiegend im rechten Winkel zu der spiralförmigen Strömung des das Innenrohr 2 durchlaufenden Wassers ausgerichtet sind. Diese spiralförmige Wasserströmung wird durch die doppelläufige Schnecke der Vorrichtung 9 im zustromseitigen Anschlußstück des Gerätes verursacht, wobei das in Richtung auf das Innenrohr 2 strömende Wasser aufgrund der konischen Verengung 13 beschleunigt wird, so daß sich das Gerät sowohl zur Behandlung relativ kleiner als auch relativ großer Wassermengen eignet. Es wurde festgestellt, daß bereits bei Wassermengen von ca. 0,5 l/min die angestrebten Behandlungseffekte des Wassers erreicht werden, ebenso wie für größere Durchflußmengen von bis zu 60 l/min und darüber. Diese Behandlungseffekte betreffen die Kalkausfällung sowie eine Schutzschichtbildung im Innenrohr und Abtragung alter Inkrustationen in dem angeschlossenen Rohrsystem sowie eine Verminderung von Rohrkorrosionen und infolgedessen auch eine Einsparung von Waschmitteln sowie günstige biologische Wirkungen.

Ein wesentliches Merkmal des erfindungsgemäßen Gerätes ist die doppelläufige Schnecke, da diese bei einem nur geringen Druckverlust das einströmende Wasser im wesentlichen unabhängig von den Durchflußmengen in nahezu gleichem Winkel durch das Innenrohr um die Spindel 15 lenkt, so daß die Gesamtlänge des spiralförmig geführten Wasserstroms ein Mehrfaches der Innenrohrlänge ausmacht. Dadurch wird über eine relativ kurze Strecke bzw. Länge des Innenrohres, die bei einem Versuchsmodell 184 mm betrug, eine große Zahl von Schnittstellen des Wasserstroms mit den Magnetfeldern erreicht, von denen einige halbkreisförmig von einem Eisenpolschuh 4 zum anderen wandern, andere auf die Spindel 15 gelenkt werden. Entsprechend groß ist der Wirkungsgrad des Gerätes bei der Wasserbehandlung.

Das erwähnte Versuchsmodell des erfindungsgemäßen Behandlungsgerätes hat eine Gesamtlänge von 300 mm und einen Außendurchmesser von 54 mm, einen Innenrohrinnendurchmesser von 19 mm, einen äußeren Durchflußdurchmesser der Anschlußstücke von 33, 5 mm, der durch die konischen Verengungen auf den Innenrohrdurchmesser reduziert wird. Dieses Gerät ist mit 14 leistungsstarken Ringmagneten entsprechend der in Fig. 1 dargestellten Anordnung ausgestattet sowie mit 8 Distanzringen, die die Magnetfelder der nach dem ersten und letzten Distanzring beidseitig angeordneten doppelten Ringmagnete auf die Mitte der Eisenpolschuhe konzentrieren. Durch die aus Eisen bestehende Spindel werden in diesem Fall 8 Magnetfelder auf die Spindel geleitet und weitere Magnetfelder wandern halbkreisförmig von einem als Eisenpolschuh ausgebildeten Distanzring zum anderen.

## Patentansprüche

1. Permanentmagnetisches Flüssigkeitsbehandlungsgerät mit einem paramagnetischen, rohrförmigen Gehäuse, das von der zu behandelnden Flüssigkeit durchströmbar ist und in dem koaxial zur Gehäuselängsachse Ringmagnete und Distanzringe aus Eisen angeordnet sind, wobei das Gehäuse an seinen beiden Enden angebrachte Anschlußstücke aufweist und in seinem Inneren mit einer schneckenförmigen Fördervorrichtung für die zu behandelnde Flüssigkeit versehen ist, dadurch **gekennzeichnet,** daß in dem rohrförmigen Gehäuse (1) koaxial zu seiner Längsachse (10) und mit Abstand von seiner Innenwand (16) ein die zu behandelnde Flüssigkeit durch das Gehäuse durchleitendes Innenrohr aus Kunststoff angeordnet ist, dessen beidseitige Enden (17, 18) mit den Anschlußstücken (7, 8) flüssigkeitsdicht verbunden sind, deren Durchflußquerschnitt sich in Richtung auf die Gehäuseenden (5, 6) erweitert, daß die schneckenförmige Fördervorrichtung (9) in wenigstens einer der beiden Erweiterungen (13, 14, 40) der Anschlußstücke angeordnet ist, und daß die Ringmagnete (3) und Distanzringe (4) in dem flüssigkeitsfreien Raum zwischen dem Innenrohr (2) und dem rohrförmigen Gehäuse (1) in Richtung der Gehäuselängsachse (10) hintereinanderliegend eingebaut sind, wobei die Ringmagnete (3) und Distanzringe (4) auf dem Innenrohr (2) aufsitzen und Magnetfelder erzeugen, die überwiegend im rechten Winkel zu der spiralförmigen Strömung des das Innenrohr (2) durchlaufenden Wassers ausgerichtet sind.

2. Gerät nach Anspruch 1, dadurch **gekennzeichnet,** daß die schneckenförmige Fördervorrichtung (9) in dem zustromseitigen Anschlußstück (7) sitzt und als doppelläufige Schnecke ausgebildet ist.

3. Gerät nach Anspruch 1 oder 2, dadurch **gekennzeichnet,** daß die Erweiterungen (13, 14) der Anschlußstücke (7, 8) konisch geformt sind und an ihren inneren Enden direkt an den Durchflußquerschnitt des Innenrohres (2) anschließen und an ihren äußeren Enden in zylindrisch geformte Gewindestükke (19, 20) übergeben, mit denen die Rohrleitung verschraubbar ist, in die das Gerät eingebaut wird.

4. Gerät nach einem der Ansprüche 1 bis 3, dadurch **gekennzeichnet,** daß die schneckenförmige Fördervorrichtung (9) so ausgebildet ist, daß sie einen schraubenförmigen Durchgang der Flüssigkeit durch das Innenrohr (2) bewirkt.

5. Gerät nach einem der Ansprüche 1 bis 4, dadurch **gekennzeichnet,** daß die Anschlußstücke (7, 8) mit dem rohrförmigen Gehäuse (1) verschraubt sind.

6. Gerät nach einem der Ansprüche 1 bis 5, dadurch **gekennzeichnet,** daß die Anschlußstücke (7, 8) mit ihren inneren Enden (21. 22) den die Ringmagnete (3) und Distanzringe (4) aufnehmenden Ringraum zwischen dem Innenrohr (2) und dem rohrförmigen Gehäuse (1) stirnseitig flüssigkeitsdicht abschließen.

7. Gerät nach einem der Ansprüche 1 bis 6, dadurch **gekennzeichnet,** daß sich durch das Innenrohr (2) zentrisch zur Mittelachse (10) eine Eisenspindel (15) erstreckt, die in die Anschlußstücke (7, 8) hineinragt und auf deren Ende innerhalb des zustromseitigen Anschlußstückes (7) die schneckenförmige Fördervorrichtung (9) sitzt.

8. Gerät nach Anspruch 7, dadurch **gekennzeichnet,** daß auf dem abstromseitigen Ende der Spindel (15) innerhalb des Anschlußstückes (8) eine scheibenförmige Zentriervorrichtung (11, 12) angeordnet ist, die die Spindel (15) auf der sie umgebenden Wandung der Erweiterung (14) abstützt.

9. Gerät nach einem der Ansprüche 1 bis 8, dadurch **gekennzeichnet,** daß die Ringmagnete (3) axial magnetisiert sind und jeweils paarweise gegenpolig zusammenliegen und daß die paarweise angeordneten Ringmagnete durch je einen Distanzring (4) voneinander getrennt sind.

10. Gerät nach Anspruch 9, dadurch **gekennzeichnet,** daß die Distanzringe (4) als Eisenpolschuhe ausgebildet sind.

11. Gerät nach einem der Ansprüche 1 bis 10, dadurch **gekennzeichnet,** daß die Ringmagnete (3) und Distanzringe (4) auf dem Innenrohr (2) aufsitzen.

12. Gerät nach einem der Ansprüche 1 bis 11, dadurch **gekennzeichnet,** daß das Innenrohr (2) glattwandig ist und keine Schikanen aufweist.

## Claims

1. Apparatus for the treatment of liquids by permanent magnets comprising a paramagnetic, tubular housing through which the liquid to be treated can flow and in which ring magnets and distance rings made of iron are positioned coaxially to the longitudinal axis of the housing, said housing comprising connecting pieces disposed at its both ends and inside the housing provided a worm conveyor for the liquid to be treated, **characterized** in that an inner tube made of plastic material guiding the liquid to be treated through the housing is positioned in the tubular housing (1) coaxially to its longitudinal axis (10) and spaced from its inner wall (16), wherein both ends (17, 18) of the inner tube are connected to the connecting pieces (7, 8) in a liquidproof manner, the flow cross section of which is enlarged in direction to the ends (5, 6) of the housing, that the worm conveyor (9) is positioned in at least one of the two enlargements (13,14,40) of the connecting pieces, and that the ring magnets (3) and the distance rings (4) are mounted one after the other in direction of the longitudinal axis (10) of the housing in the liquid-free space between the inner tube (2) and the tubular housing (1), wherein the ring magnets (3) and the distance rings (4) rest on the inner tube (2) and generate magnetic fields mainly directed in a right angle to the spiral-like flow of the water streaming through the inner tube (2).

2. Apparatus according to claim 1, **characterized** in that the worm-like conveyor (9) is positioned in the upstream connecting piece (7) and is formed as a double rotor worm.

3. Apparatus according to claim 1 or 2, **characterized** in that the enlargements (13, 14) of the connecting pieces (7, 8) are conically formed and are directly connected at their inner ends to the flow cross section of the inner tube (2) and change over at their outer ends to cylindrically formed threaded pieces (19, 20), which can be threadably connected to the conduit in which the apparatus is built-in.

4. Apparatus according to one of claims 1 to 3, **characterized** in that the worm conveyor (9) is formed such that a helical passage of the liquid through the inner tube (2) is effected.

5. Apparatus according to one of claims 1 to 4, **characterized** in that the connecting pieces (7, 8) are threadably connected to the tubular housing (1).

6. Apparatus according to one of claims 1 to 5, **characterized** in that the annulus between the inner tube (2) and the tubular housing (1) which houses the ring magnets (3) and the distance rings (4), is closed in a liquidproof manner at its end faces by the inner ends (21, 22) of the connecting pieces (7, 8).

7. Apparatus according to one of claims 1 to 6, **characterized** in that an iron spindle (15) extends through the inner tube (2) in a centrical manner with respect to the center line (10) and projects into the connecting pieces (7, 8), on the end of which within the upstream connecting piece (7) the worm conveyor (9) is placed.

8. Apparatus according to claim 7, **characterized** in that a disc shaped centering device (11, 12) is positioned on the downstream end of the spindle (15) within the connecting piece (8), which centering device supports the spindle (15) on the wall of the enlargement (14) surrounding the spindle.

9. Apparatus according to one of claims 1 to 8, **characterized** in that the ring magnets (3) are axially magnetized and placed together in pairs each in a counterpole manner and that the ring magnets disposed in pairs are separated from one another, respectively, by one distance ring (4).

10. Apparatus according to claim 9, **characterized** in that the distance rings (4) are formed as iron pole shoes.

11. Apparatus according to one of claims 1 to 10, **characterized** in that the ring magnets (3) and the distance rings (4) are located on the inner tube (2).

12. Apparatus according to one of claims 1 to 11, characterized in that the inner tube (2) comprises smooth walls and no flow disturbing means.

## Revendications

1. Dispositif de traitement de liquides à l'aide d'aimants permanents comportant un boîtier tubulaire paramagnétique qui est parcouru par le liquide à traiter et dans lequel des aimants annulaires sépares par des anneaux entretoises en fer sont disposés coaxialement par rapport à l'axe longitudinal du boîtier, ledit boîtier, qui présente à ses deux extrémités des pièces de raccordement rapportées, étant pourvu en son intérieur d'un dispositif de propulsion réalise sous la forme d'une vis sans fin pour le liquide à traiter, caractérisé en ce qu'un tube interne en matière plastique est dispose dans le boîtier tubulaire (1) coaxialement par rapport à son axe longitudinal (10) et à une certaine distance de sa paroi interne (16) pour conduire le liquide à traiter à travers le boîtier, tube dont les deux extrémités (17, 18) sont raccordées de façon étanche aux liquides avec les pièces de raccord (7, 8) dont la section traversée par le liquide va en s'élargissant en direction des extrémités (5, 6) du boîtier, en ce que le dispositif de propulsion (9) ayant la forme d'une vis sans fin est disposé dans au moins l'un des deux élargissements (13, 14, 40) des pièces de raccord, et en ce que l'aimant annulaire (3) et les anneaux entretoises (4) sont montés les uns derrières les autres dans l'espace sans liquide existant entre le tube interne (2) et le boîtier tubulaire (1) selon l'axe longitudinal (10) dudit boîtier, les aimants (3) et les anneaux entretoises (4) étant montés sur le tube interne (2) et engendrant des champs magnétiques dont l'orientation principale est perpendiculaire au courant spiralé de l'eau circulant dans le tube interne (2).

2. Dispositif selon la revendication 1, caractérisé en ce que le dispositif de propulsion (9) réalise sous la forme d'une vis sans fin est monté dans la pièce de raccord (7) située du côté de l'entrée de liquide et est réalisé sous la forme d'une vis à double filet.

3. Dispositif selon l'une quelconque des revendications 1 ou 2, caractérisé en ce que les élargissements (13, 14) des pièces de raccord (7, 8) ont une forme conique et se raccordent directement par leur extrémité intérieure à la section du flux traversant le tube interne (2) et se prolongent à leurs extrémités externes par des pièces filetées (19, 20) cylindriques susceptibles d'être raccordées par vissage avec la canalisation tubulaire dans laquelle le dispositif est à insérer.

4. Dispositif selon l'une quelconque des revendications 1 à 3, caractérisé en ce que le dispositif de propulsion (9) ayant la forme d'une vis sans fin est réalise de telle façon qu'il engendre un écoulement spiralé du liquide à travers le tube interne (2).

5. Dispositif selon l'une quelconque des revendications 1 à 4, caractérisé en ce que les pièces de raccord (7, 8) sont vissées sur le boîtier tubulaire (1).

6. Dispositif selon l'une quelconque des revendications 1 à 5, caractérisé en ce que les pièces de raccord (7, 8) ferment de façon étanche par leurs extrémités internes (21, 22) l'espace annulaire recevant les aimants annulaires (3) et les anneaux entretoises (4).

7. Dispositif selon l'une quelconque des revendications 1 à 6, caractérisé en ce qu'une broche en fer (15) centrée sur l'axe longitudinal (10) s'étend à travers le tube interne (2) et pénètre dans les pièces de raccord (7, 8), broche sur l'extrémité de laquelle et à l'intérieur de la pièce de raccord (7) se trouvant du côte de l'entrée de liquide se trouve un dispositif de propulsion à vis sans fin (9).

8. Dispositif selon la revendication 7, caractérisé en ce que du côté de la broche (15) situé vers la sortie du liquide et à l'intérieur de la pièce de raccord (8) est monté un dispositif de centrage (11, 12) constitué par un disque qui soutient la broche (15) par rapport à la paroi environnante de l'élargissement (14).

9. Dispositif selon l'une quelconque des revendications 1 à 8, caractérisé en ce que les aimants annulaires (3) sont aimantes axialement et sont disposés par paires de polarités opposées et en ce que les paires d'aimants annulaires sont respectivement séparées les unes des autres par un anneau entretoise (4).

10. Dispositif selon la revendication 9, caractérisé en ce que les anneaux entretoises (4) forment des pièces polaires en fer.

11. Dispositif selon l'une quelconque des revendications 1 à 10, caractérisé en ce que les aimants annulaires(3) et les anneaux entretoises (4) sont montés dans le tube interne (2).

12. Dispositif selon l'une quelconque des revendications 1 à 11, caractérisé en ce que le tube interne (2) est à paroi lisse et ne présente aucune chicane.
